# DEMANDE DE BREVET EUROPEEN

(11) **EP 3 246 382 A1**
(43) Date de publication de la demande: **22.11.2017**
(21) Numéro de dépôt: 17171729.1
(22) Date de dépôt: 18.05.2017
(51) Int. Cl.: C10L 5/44, C10L 5/46, C10L 5/48

(54) **PROCÉDÉ DE TRAITEMENT DE MATIÈRES VÉGÉTALES LIGNEUSES ET DE COMBUSTIBLES SOLIDES DE RÉCUPÉRATION POUR LA PRODUCTION DE BIOCOMBUSTIBLE GRANULÉS**

(30) Priorité: 18.05.2016 FR 1670242
(71) Demandeur: Green Research, 14200 Herouville Saint-Clair (FR)
(72) Inventeur: SAIAH, Redouan, 93400 SAINT OUEN (FR); ZAKI, Oussama, 76100 ROUEN (FR); JOUIN, Patrick, 14340 MANERBE (FR)
(74) Mandataire: Hege, Frédéric

(57) **Abrégé**

La présente invention concerne un procédé de traitement de matières végétales ligneuses et/ou de combustibles solides de récupération, comportant les étapes suivantes :
• orientation desdites matières vers deux flux distincts, un flux destiné à une gazéification, et un flux destiné à une granulation,
• gazéification du flux destiné à la gazéification,
• granulation du flux destiné à la granulation

La présente invention concerne également une installation de traitement de matières végétales ligneuses et/ou de combustibles solides de récupération, caractérisée en ce qu'elle comporte une ligne de gazéification et une ligne de granulation, ainsi qu'une unité d'orientation desdites matières vers lesdites lignes de gazéification et de granulation.

## Description

La présente invention se situe dans le domaine de la production d'énergies à partir de matières organiques. Elle concerne plus particulièrement un procédé de traitement de matières végétales ligneuses et de combustibles solides de récupération pour la production de biocombustibles granulés.

A mesure que les réserves en sources d'énergies fossiles s'amenuisent, il devient aujourd'hui important de développer des sources d'énergie alternatives. Les problèmes environnementaux étant un sujet de préoccupation prioritaire dans nos sociétés contemporaines, il est également nécessaire que ces nouvelles sources d'énergie soient plus respectueuses de l'environnement que les énergies fossiles. Produire de l'énergie à partir de matières végétales ligneuses et de combustibles solides de récupération, obtenus à partir de déchets organiques, permet de répondre à ces deux problématiques.

Le document FR2844804A1 propose un procédé et une installation de valorisation de sous-produits à base de matières organiques. Ce procédé permet de produire de l'énergie sous forme d'électricité et de chaleur, mais ne permet pas de produire de biocombustibles sous la forme de granulés.

Le document FR3012820A1 divulgue un agrocombustible solide, ainsi que son procédé de production à partir de matières organiques. De l'électricité peut également être produite, constituant un second type d'énergie qui peut être réutilisé dans l'installation ou en-dehors. Cependant, la séparation des matières organiques dédiée à la production de chacun des types d'énergie est faite par méthanisation, un processus de fermentation à température ambiante produisant une quantité fixe de biogaz et de digestat. Il n'est donc pas possible de paramétrer l'installation afin de décider quelle quantité de matière organique est dédiée à quel type d'énergie.

La présente invention a pour objet de pallier au moins en partie à ces inconvénients. A cet effet, elle propose un procédé de traitement de matières végétales ligneuses et/ou de combustibles solides de récupération. Ce procédé est particulier en ce qu'il comporte les étapes suivantes :
- orientation desdites matières vers deux flux distincts, un flux destiné à une gazéification, et un flux destiné à une granulation,
- gazéification du flux destiné à la gazéification,
- granulation du flux destiné à la granulation.

Grâce à ces dispositions, du gaz et des granulés peuvent être produits au cours d'un même procédé, dans des quantités indépendantes l'une de l'autre.

Selon d'autres caractéristiques :
- le procédé peut comprendre en outre les étapes suivantes :
   - séchage desdites matières dans au moins un des deux flux,
   - combustion des gaz obtenus au cours de la gazéification,
   - renvoi de la chaleur dégagée par ladite combustion comme apport d'énergie pour l'étape de séchage d'au moins un des deux flux,
   permettant ainsi que l'énergie thermique consommée par l'étape de séchage qui peut être requise avant granulation et/ou gazéification soit issue du procédé lui-même et donc de réduire la consommation externe d'énergie du procédé,
- le procédé peut comprendre dans au moins un des deux flux, avant l'étape de séchage, une étape de broyage, en particulier pour obtenir des broyats de dimensions inférieures à 20 cm, préférentiellement inférieures à 15 cm, avantageusement inférieures à 10 cm dans ledit flux, plus avantageusement comprises entre 2 et 6 cm si ledit flux est destiné à la granulation et plus avantageusement comprises entre 2 et 8 cm si ledit flux est destiné à la gazéification ; les broyats ne doivent pas être trop grands ; en effet les interstices entre les fragments de matière doivent être suffisamment réduits pour qu'à l'étape de séchage, le fluide de séchage séjourne suffisamment longtemps auprès des fragments en produisant tout le séchage souhaité ; par ailleurs, les broyats ne doivent pas être trop petits, pour éviter que le tas de matière ne soit trop compact, et que le fluide de séchage ne puisse plus suffisamment passer à travers,
- le séchage des matières destinées à la phase de granulation peut être réalisé pour atteindre un taux d'humidité compris entre 8 et 15%, préférentiellement entre 10 et 12%, ce qui permet que lors de leur utilisation, les granulés soient suffisamment secs pour être brûlés sans nécessiter un apport d'énergie préalable pour les sécher, tout en évitant qu'ils ne deviennent trop friables,
- le séchage des matières destinées à la phase de gazéification peut être réalisé pour atteindre un taux d'humidité inférieur à 25%, préférentiellement inférieur à 20%, avantageusement inférieur à 15%, plus avantageusement inférieur à 10%, ce qui permet de réduire l'énergie consommée par le processus de gazéification,
- dans l'étape de séparation des matières, le flux destiné à une granulation peut ne contenir que des bois naturels, ce qui permet de produire des granulés de bonne qualité sans impuretés,
- dans l'étape de séparation des matières, le flux destiné à une gazéification peut contenir des combustibles solides de récupération, permettant une valorisation de matériaux de récupération et/ou de déchets.

La présente invention concerne également une installation de traitement de matières végétales ligneuses et/ou de combustibles solides de récupération, caractérisée en ce qu'elle comporte une ligne de gazéification et une ligne de granulation, ainsi qu'une unité d'orientation desdites matières vers lesdites lignes de gazéification et de granulation.

Grâce à ces dispositions, du gaz et des granulés peuvent être produits dans la même installation, dans des quantités indépendantes l'une de l'autre.

Selon d'autres caractéristiques :
- au moins une des lignes de gazéification ou granulation peut comporter une unité de séchage, et ladite ligne de gazéification comporter une unité dégageant de la chaleur, et une conduite apte à amener ladite chaleur vers ladite unité de séchage, permettant ainsi que l'énergie thermique consommée par l'unité de séchage, qui peut être placée avant les lignes de granulation et/ou gazéification, soit issue de l'installation elle-même et donc de réduire la consommation externe d'énergie de l'installation,
- ladite ligne de gazéification peut comporter un dispositif de fabrication d'électricité à partir du gaz produit par ladite gazéification, et des conduites d'électricité aptes à conduire ladite électricité vers diverses machines de l'installation, permettant de réduire les besoins en énergie électrique extérieure de l'installation.

La présente invention sera mieux comprise à la lecture de la description détaillée qui fait suite, en référence aux figures annexées dans lesquelles :

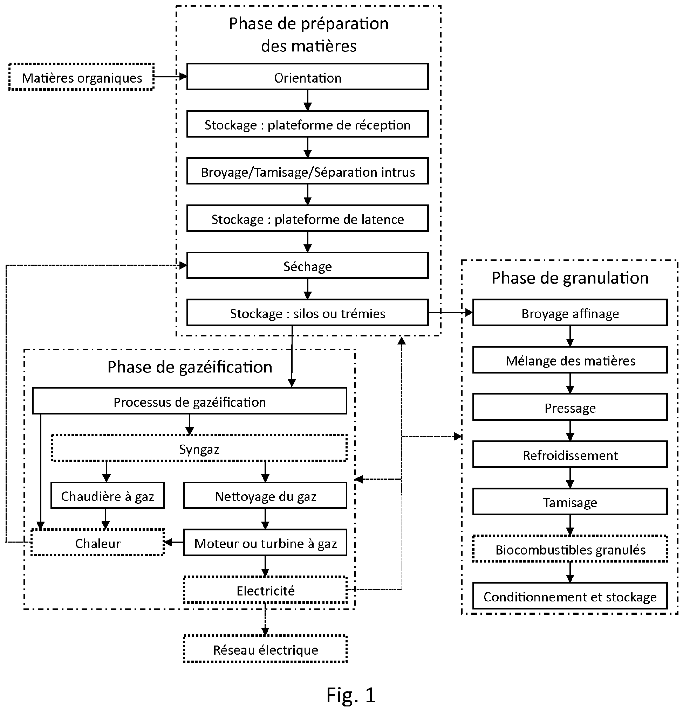

- Les figures 1 à 6 sont des diagrammes illustrant les phases et les étapes du procédé selon différents modes de réalisation de l'invention.

Le procédé selon l'invention utilise des matières organiques telles que des matières végétales ligneuses et des combustibles solides de récupération. Les matières ligneuses comportent les bois de classe A, c'est-à-dire les bois non traités et non peints, et les bois de classe B, qui sont des bois faiblement adjuvantés, à savoir les bois massifs peints, traités ou vernis, les bois de charpente, et les panneaux de process. Dans la suite de la présente demande, l'expression « bois naturel » signifie du bois propre, sans peinture, traitement ou verni, pouvant être classé en classe A ; l'expression « bois traité en surface » signifie du bois peint, ou verni, mais non traité à coeur, pouvant être classé en classe B. Les combustibles solides de récupération (aussi appelés CSR) comportent tout type de déchets non dangereux solides, non constitués de biomasse uniquement, dont le pouvoir calorifique est suffisamment élevé pour présenter un intérêt en valorisation par combustion. Les CSR peuvent être produits à partir de gisements de déchets municipaux ou industriels, et ils sont par exemple composés d'un ou plusieurs éléments suivants : pneus, plastiques, résidus de broyage automobile, papiers/cartons/boues de papeterie, bois et déchets de bois de classe B, boues de stations d'épuration, textiles, déchets ménagers. Dans la suite de la présente demande, le terme de matière sera utilisé pour parler indifféremment d'un de ces types de matières ou d'une combinaison de ces matières.

Le procédé selon l'invention comporte trois grandes phases : la phase de préparation des matières, la phase de gazéification et la phase de granulation.

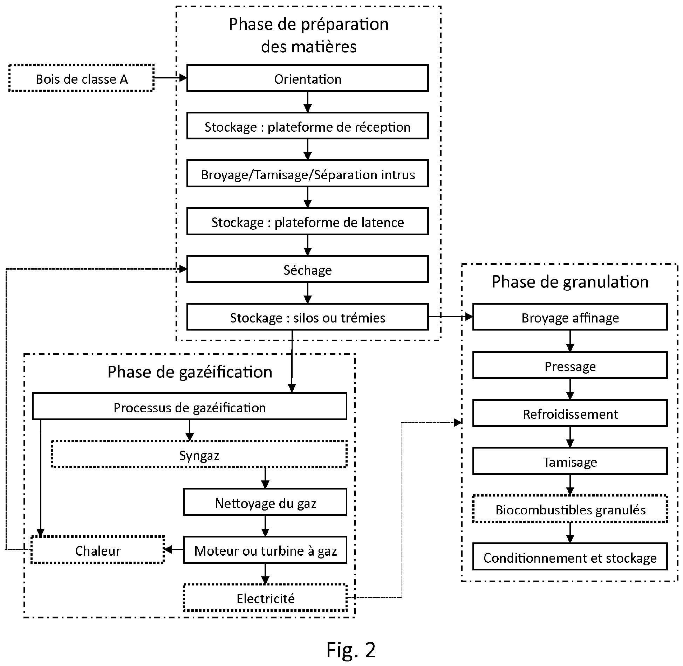

Dans son mode de réalisation le plus complet, le procédé est tel que représenté par diagramme en fig. 1, et regroupe les étapes décrites ci-dessous. Selon les besoins particuliers de chaque installation, certaines étapes peuvent être supprimées. D'autres modes de réalisations sont ainsi représentés aux fig. 2 à 6.

La phase de préparation des matières est préalable aux phases de gazéification et de granulation. Elle comporte une étape d'orientation, destinée à orienter les matières vers deux flux distincts, l'un vers la gazéification, l'autre vers la granulation, et peut comporter une étape de séchage. La phase de préparation des matières peut également comporter une étape de broyage, tamisage et séparation des intrus et des étapes de stockage intermédiaires.

Lors de l'étape d'orientation, les matières sont réceptionnées et orientées suivant leurs destinations pour les phases de granulation ou de gazéification. Les quantités de matière peuvent par exemple être de à 8750 tonnes par an destinées à la phase de granulation et de 2700 tonnes par an destinées à la phase de gazéification.

Les matières peuvent ensuite être stockées dans une plateforme dédiée à la réception des matières pour une durée par exemple de l'ordre de 3 ou 6 mois pour des matières aptes à sécher en plein air, de sorte que leur taux d'humidité se réduit ainsi sans apport d'énergie, ou encore une durée inférieure à 15 jours pour des produits qui sinon auraient tendance à commencer à fermenter.

Une étape de broyage, tamisage et séparation peut ensuite être nécessaire. Ces opérations permettent de préparer les matières suivant les dimensions optimales pour le séchage et selon les exigences des phases de granulation ou de gazéification, d'éliminer principalement les petites particules riches en matières minérales et d'éliminer les cailloux, les pierres, la terre et/ou les métaux. Par exemple, le broyage peut être réalisé pour obtenir des fragments de dimensions inférieures à 20 cm, de préférence entre 2 et 6 cm pour les matières destinées à la phase de granulation.

Pour les matières destinées à la phase de gazéification, le broyage peut se faire pour obtenir des fragments de dimensions inférieures à 20, de préférence inférieures à 15 ou même à 10 cm, typiquement entre 2 et 8 cm.

En effet pour des dimensions trop importantes, en particulier supérieures à 10 cm, plus encore si elles sont supérieures à 15 ou même 20 cm, les interstices entre les fragments deviennent trop grands, et le fluide de séchage passe à travers le tas de fragments sans produire tout le séchage souhaité. Par contre si les fragments deviennent trop petits, le tas devient trop compact, et le fluide de séchage n'arrive plus à passer suffisamment à travers.

On peut prévoir que le séchage pour les produits destinés à la granulation soit réalisé plus fin que pour les produits destinés à la gazéification ; en effet le séchage des produits destinés à la granulation doit permettre d'obtenir des produits avec une humidité se situant dans un intervalle plus restreint, du fait qu'il n'y a plus d'étape de séchage ultérieur. Alors que pour les produits destinés à la gazéification, on peut toujours parfaire le séchage dans l'unité de gazéification, au prix simplement d'un rendement de l'unité de gazéification un peu moins bon.

Les matières peuvent ensuite être stockées dans une plateforme de latence. La durée de stockage peut là aussi être adaptée selon les produits et selon les besoins, entre par exemple à une durée de 1 ou 3 mois, et à l'autre extrême, une durée inférieure à 7 jours.

Les matières passent ensuite par l'étape de séchage afin de faire baisser le taux d'humidité et d'atteindre les seuils optimaux des phases de granulation ou de gazéification. Avant cette étape, le taux d'humidité peut par exemple être de 35% pour un bois naturel de type résineux. L'objectif pour les matières destinées à la phase de granulation est d'atteindre un taux d'humidité qui peut être compris entre 8 et 15%, de préférence entre 10 et 12%. Pour des taux d'humidité trop élevés, en particulier supérieurs à 12%, plus encore supérieurs à 15%, la performance énergétique des granulés obtenus est plus faible, et peut développer de la moisissure lors de son stockage ; pour des taux d'humidité trop faibles, et notamment inférieurs à 10 ou même à 8%, les granulés deviennent friables, et produisent trop de poussière. Pour les matières destinées à la phase de gazéification, l'objectif peut être d'atteindre un taux d'humidité inférieur à 25%, de préférence inférieur à 15%, ou même 14 ou 10%. Dans un mode particulier de réalisation de l'invention, l'étape de séchage est réalisée dans une unité mobile de séchage.

Les matières séchées peuvent ensuite être stockées dans des silos ou des trémies pour éviter la reprise d'humidité et permettre un fonctionnement en continu des phases de granulation et de gazéification.

La phase de granulation comporte une étape de broyage affinage, ainsi que des étapes de pressage, refroidissement tamisage, conditionnement et stockage.

Une étape de mélange des matières peut également être nécessaire. L'étape de granulation peut se dérouler dans une unité mobile de granulation. On peut en effet envisager d'effectuer le séchage à des moments différents de la granulation. La granulation peut alors se faire là où se trouve un stock de matières végétales ligneuses déjà séchées, par une unité mobile de granulation, qui peut se déplacer sur différents sites.

Il est également possible de regrouper l'étape de séchage et la phase de granulation dans une seule unité mobile de séchage-granulation. Cela permet de faire fonctionner une telle unité mobile en association avec une autre ligne de gazéification dont un autre utilisateur peut disposer. Il est préférable néanmoins pour cela de disposer de matières pour la granulation suffisamment petites pour pouvoir être séchées sans broyage préalable.

Au début de la phase de granulation, l'étape de broyage affinage permet de faire réduire la taille des matières ligneuses de quelques centimètres à quelques millimètres, en particulier entre 3 et 5 mm, ce qui constitue la dimension optimale pour produire des granulés. L'étape de mélange des matières peut ensuite intervenir. Les éléments à mélanger peuvent être différents types de matières organiques issus de l'étape de broyage affinage, et des additifs de granulation et/ou de combustion incorporés par un système de dosage. De tels additifs améliorent par exemple l'adhésion des particules pour former les granulés, et sont particulièrement utiles pour des granulés faits à partir de feuillus. Les additifs peuvent être sous forme de poudres minérales et/ou organiques. L'étape de pressage permet ensuite de compresser le mélange des matières obtenu, pour lui donner la forme de bâtonnets cylindriques. L'étape de refroidissement permet ensuite d'améliorer la dureté des granulés en faisant baisser brutalement leur température à l'aide de l'air. Finalement, l'étape de tamisage permet d'éliminer les fines. Les granulés passent finalement à l'étape de conditionnement et stockage, lors de laquelle ils peuvent être mis dans des sacs, en plastique ou en papier, puis empilés sur une palette. Ils peuvent aussi être stockés dans des big-bags, silos, trémies, etc. ou chargés directement dans un camion de livraison.

La phase de gazéification comporte le processus de gazéification, suivi de son utilisation directement dans une chaudière à gaz, afin de produire de la chaleur, ou de sa valorisation après une opération de nettoyage, dans un moteur et/ou une turbine à gaz afin de produire de la chaleur et de l'électricité.

Le processus de gazéification peut être fait selon divers procédés de l'état de la technique, et notamment à lit fixe co-courant, contre-courant, étagé en cascade ou à coeur ouvert ; à lit fluidisé dense, circulant ou sous pression ; ou à lit entraîné. Selon le type de procédé choisi, et notamment dans le cas du lit fluidisé et du lit entraîné, un broyage supplémentaire peut être nécessaire en préalable du processus de gazéification, afin d'obtenir des fragments d'une dimension inférieure au centimètre. Un tel broyage ne peut pas être réalisé avant le séchage de la phase de préparation des matières, car il résulterait en une masse de matière trop compacte qui ne permettrait pas un séchage efficace.

Dans un mode de réalisation préféré de l'invention, le processus de gazéification est un procédé à lit fixe co-courant, et comporte les étapes suivantes :
- Séchage des matières : pendant la montée en température, le séchage se produit au sein du réacteur. La vapeur d'eau dégagée lors de cette étape constitue un réactif, utilisé pour les étapes de reformage des gaz et de gazéification du char,
- pyrolyse : les matières sont chauffées à haute température sous atmosphère inerte, permettant la dégradation de ses différents constituants pour produire des matières volatiles (gaz condensables et incondensables) et un résidu poreux carboné appelé le char,
- oxydation des matières volatiles : l'oxydation des matières volatiles produites lors de la phase de pyrolyse est réalisée par un apport d'air ou d'oxygène, générant ainsi l'énergie nécessaire au procédé de gazéification,
- craquage et reformage des goudrons : les molécules lourdes (goudrons) se fractionnent en molécules plus légères (craquage) sous l'effet de températures élevées. Pour le reformage, les molécules lourdes réagissent avec un agent réactionnel, sous l'effet d'une température élevée, ledit agent permettant de former du monoxyde de carbone (CO) et de l'hydrogène (H) lorsqu'il est sous forme de vapeur d'eau, et d'obtenir un reformage à sec des goudrons lorsqu'il est sous forme de dioxyde de carbone (CO2),
- gazéification hétérogène du char : le carbone du char réagit avec le dioxyde de carbone et la vapeur d'eau. Ce sont des réactions endothermiques conduisant à la production d'hydrogène et de monoxyde de carbone. L'oxygène résiduel de l'étape d'oxydation des matières volatiles réagit avec le carbone du char pour apporter de l'énergie au procédé. Par ailleurs, il existe d'autres réactions qui ont lieu en phase homogène contrôlant la composition finale du gaz de synthèse.

Le gaz obtenu à l'issue du processus de gazéification est un gaz de synthèse, appelé également syngaz. A la sortie du réacteur, le syngaz peut être refroidi et lavé pour éliminer l'eau, les cendres et les restes de goudrons. Le syngaz est ensuite directement brûlé dans une chaudière à gaz, pour produire de la chaleur, ou passer par une étape de nettoyage avant d'être utilisé dans un moteur et/ou une turbine à gaz, permettant la production simultanée de chaleur et d'électricité.

L'étape de nettoyage peut comporter les étapes suivantes :
- élimination des goudrons résiduels,
- élimination des composés alcalins,
- élimination des polluants tels que le chlorure d'hydrogène, les molécules de type NH (phénols, acides gras, huiles, etc.), HCN et autres composés organiques,
- filtration du gaz pour retirer les plus petites particules solides encore présentes.

Comme illustré en fig. 1, la chaleur produite au cours du processus de gazéification, par la chaudière à gaz, par le moteur et/ou par la turbine à gaz, est utilisée complètement ou partiellement pour l'étape de séchage des matières de la phase de préparation des matières.

Exemple de réutilisation de la chaleur produite pour le séchage :
- 8750 tonnes de matière par an sont traitées dans la phase de granulation.
- 2700 tonnes de matière par an sont traitées dans la phase de gazéification.
- Pour la phase de granulation, le taux d'humidité avant séchage étant de 35% et le taux d'humidité après séchage étant de 10%, l'énergie thermique consommée est de 3403 MWh par an.
- Pour la phase de gazéification, le taux d'humidité avant séchage étant de 35% et le taux d'humidité après séchage étant de 15%, l'énergie thermique consommée est de 890 MWh par an.
- La chaleur issue du processus de gazéification permet d'obtenir une énergie thermique égale à 4296 MWh par an, ce qui est suffisant pour couvrir toute la consommation en énergie thermique de l'étape de séchage.

L'électricité produite par le moteur et/ou par la turbine à gaz, peut également être utilisée complètement ou partiellement pour faire fonctionner les machines de l'ensemble du procédé, ou celles de la phase de granulation.

Un deuxième mode de réalisation de l'invention est illustré en fig. 2. Dans cette configuration, l'étape de mélange des matières de la phase de granulation n'est pas nécessaire puisque seulement le bois naturel de type résineux est utilisé pour la fabrication des granulés. Cette installation ne comprend pas de chaudière, l'intégralité du syngaz étant utilisé dans le moteur ou la turbine à gaz où il produit de la chaleur et de l'électricité. Toute l'électricité produite est réutilisée dans la phase de granulation. La réutilisation de la chaleur produite peut être totale, comme dans l'exemple ci-dessus. Ainsi, toute l'énergie produite lors de la phase de gazéification sert au fonctionnement global du procédé selon l'invention. L'électricité produite peut être utilisée pour le fonctionnement des machines de l'installation, mais peut également être réinjectée dans le réseau externe d'électricité.

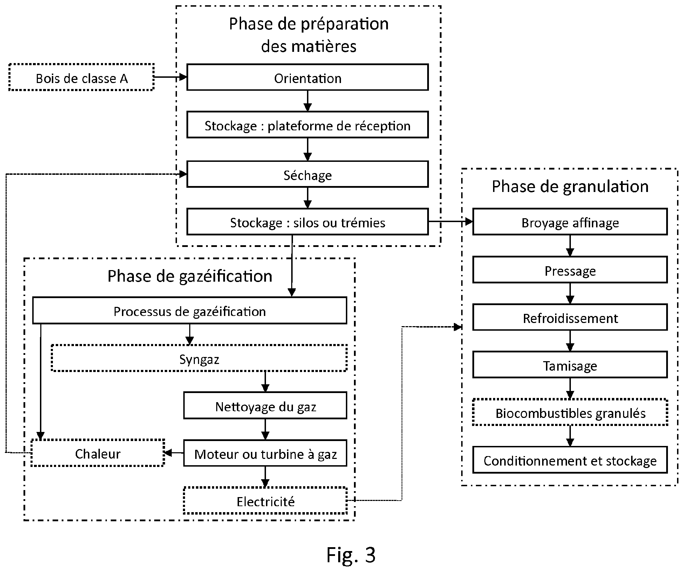

Un troisième mode de réalisation de l'invention est illustré en fig. 3. La différence avec le deuxième mode est que le bois naturel est déjà calibré à sa réception, comme dans le cas de l'utilisation de plaquettes de bois. Ainsi l'étape de Broyage/Tamisage/Séparation des intrus de la phase de préparation des matières peut être supprimée.

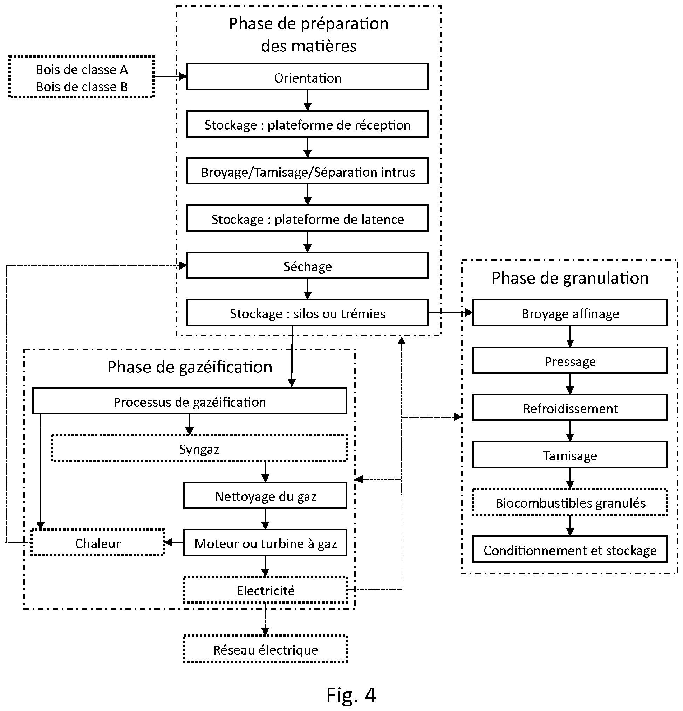

Un quatrième mode de réalisation de l'invention est illustré en fig. 4. Il consiste à utiliser du bois naturel résineux et du bois traité en surface. Le bois naturel est destiné à la granulation et le bois traité en surface est destiné à la gazéification. Après l'étape de Broyage/Tamisage/Séparation des intrus, les matières orientées vers la gazéification, peuvent selon un mode de réalisation non représenté, être directement stockées, sans passer par l'étape de séchage, dans un silo de stock tampon pour la phase de gazéification. Une telle configuration peut être envisagée lorsque les matières concernées sont relativement sèches, par exemple avec un taux d'humidité inférieur à 25% ou 20%, et qu'on estime qu'il est plus avantageux de réduire cette humidité directement dans l'unité de gazéification, sans procéder à une étape préalable de séchage. Dans cette configuration, l'étape de mélange des matières de la phase de granulation n'est pas nécessaire puisque seuls des résineux sont utilisés pour la fabrication des granulés. Cette installation ne comprend pas de chaudière, l'intégralité du syngaz étant utilisé dans le moteur ou la turbine à gaz. Puisqu'elle dépend directement de la quantité de matière orientée vers la gazéification utilisée, la quantité d'électricité produite lors de la phase de gazéification peut être plus élevée que les besoins de la phase de granulation. L'électricité peut alors être réutilisée également dans les phases de préparation des matières et de gazéification, voire injectée dans le réseau électrique. La réutilisation de la chaleur produite peut quant à elle couvrir les besoins de l'étape de séchage. Ainsi, les énergies thermique et électrique produites lors de la phase de gazéification peuvent être suffisantes pour faire fonctionner l'ensemble du procédé selon l'invention.

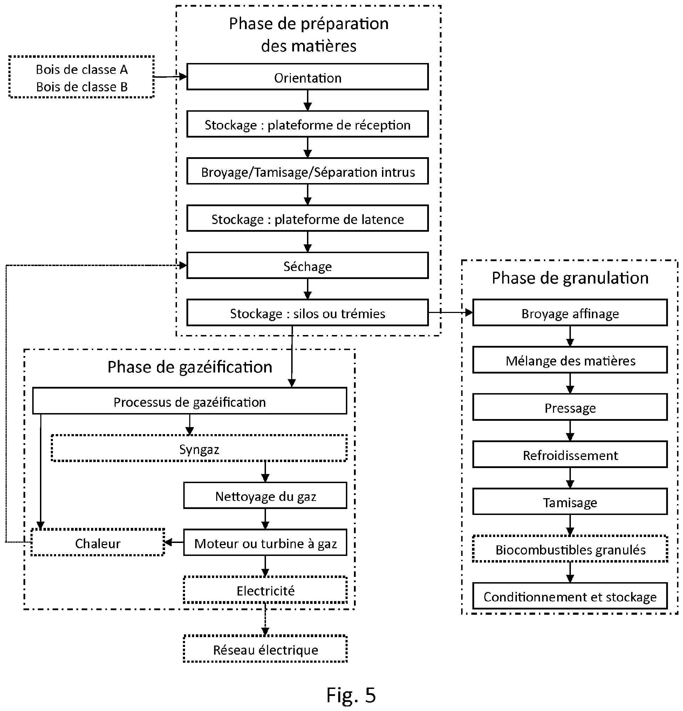

Un cinquième mode de réalisation de l'invention est illustré en fig. 5. Il consiste en un traitement de résineux et feuillus de classe A, et de bois de classe B. La différence avec le quatrième mode de réalisation est que la matière destinée à la phase de granulation peut comporter différents types de bois, notamment résineux et feuillus ; l'étape de mélange des matières peut alors être nécessaire. Dans ce mode de réalisation, l'intégralité de l'énergie produite par la phase de gazéification est injectée dans le réseau électrique, sans réutilisation au sein de l'installation. Ceci est une option possible, indépendamment du choix de mélanger des résineux et des feuillus.

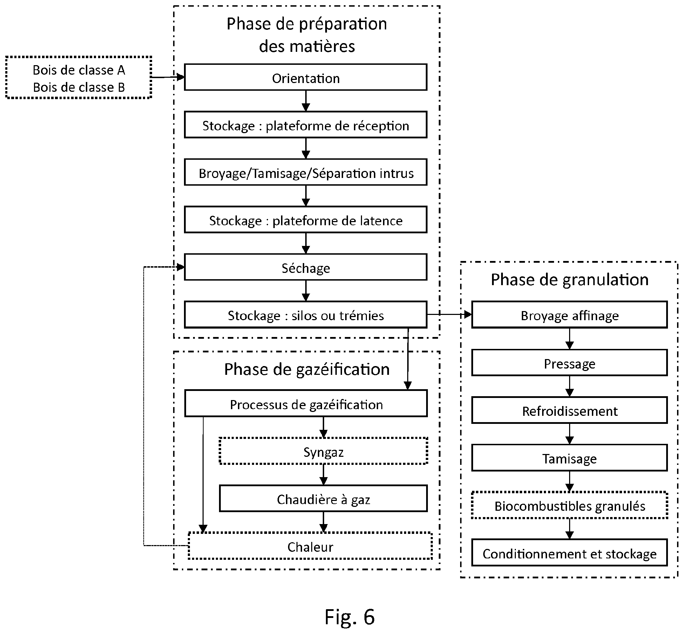

Finalement, un sixième mode de réalisation de l'invention est illustré en fig. 6. Là encore, le bois naturel issu de résineux est destiné à la granulation et le bois traité en surface est destiné à la gazéification. L'intégralité du syngaz est brûlé dans une chaudière à gaz, la phase de gazéification ne produit donc que de la chaleur et pas d'électricité. La chaleur produite peut servir à couvrir les besoins en énergie thermique de l'étape de séchage dans les deux flux.

Ces quelques exemples de modes de réalisation illustrent de manière non exhaustive les variantes possibles. Toutefois l'invention ne se limite pas à ces exemples.

## Revendications

1. Procédé de traitement de matières végétales ligneuses et/ou de combustibles solides de récupération, **caractérisé en ce qu'**il comporte les étapes suivantes :
• orientation desdites matières vers deux flux distincts, un flux destiné à une gazéification, et un flux destiné à une granulation,
• gazéification du flux destiné à la gazéification,
• granulation du flux destiné à la granulation.

2. Procédé selon la revendication précédente, comportant en outre les étapes suivantes :
• séchage desdites matières dans au moins un des deux flux,
• combustion des gaz obtenus au cours de la gazéification,
• renvoi de la chaleur dégagée par ladite combustion comme apport d'énergie pour l'étape de séchage d'au moins un des deux flux.

3. Procédé selon la revendication précédente, comprenant dans au moins un des deux flux, avant l'étape de séchage, une étape de broyage.

4. Procédé selon l'une des revendications 2 ou 3, dans lequel le séchage des matières destinées à la phase de granulation est réalisé pour atteindre un taux d'humidité compris entre 8 et 15%.

5. Procédé selon l'une des revendications 2 à 4, dans lequel le séchage des matières destinées à la phase de gazéification est réalisé pour atteindre un taux d'humidité inférieur à 25%.

6. Procédé selon l'une des revendications précédentes, dans lequel, dans l'étape d'orientation des matières, le flux destiné à une granulation ne contient que des bois naturels.

7. Procédé selon la revendication précédente, dans lequel, dans l'étape d'orientation des matières, le flux destiné à une gazéification contient des combustibles solides de récupération.

8. Installation de traitement de matières végétales ligneuses et/ou de combustibles solides de récupération, **caractérisée en ce qu'**elle comporte une ligne de gazéification et une ligne de granulation, ainsi qu'une unité d'orientation desdites matières vers lesdites lignes de gazéification et de granulation.

9. Installation selon la revendication précédente, dans laquelle au moins une des lignes de gazéification ou granulation comporte une unité de séchage, et ladite ligne de gazéification comporte une unité dégageant de la chaleur, et une conduite apte à amener ladite chaleur vers ladite unité de séchage.

10. Installation selon la revendication précédente, dans laquelle ladite ligne de gazéification comporte un dispositif de fabrication d'électricité à partir du gaz produit par ladite gazéification, et des conduites d'électricité aptes à conduire ladite électricité vers diverses machines de l'installation.
